# EUROPEAN PATENT APPLICATION

(11) **EP 4 769 297 A1**
(43) Date of publication of application: **01.07.2026**
(21) Application number: 24915809.8
(22) Date of filing: 06.11.2024
(51) Int. Cl.: G06T 5/80, G06T 7/60, G06T 7/11, G06V 40/16

(54) **ELECTRONIC APPARATUS AND CONTROL METHOD THEREOF**

(30) Priority: 03.01.2024 KR 20240000959
(71) Applicant: Samsung Electronics Co., Ltd., Suwon-si, Gyeonggi-do 16677 (KR)
(72) Inventor: KIS, Gennadiy, Kyiv 01032 (UA); HRINYK, Yurii, Kyiv 01032 (UA); LOVEIKIN, Yuriy, Kyiv 01032 (UA); SHIN, Daekyu, Suwon-si, Gyeonggi-do 16677 (KR)
(74) Representative: Gulde & Partner
(86) International application number: PCT/KR2024/017421
(87) International publication number: WO 2025/146920

(57) **Abstract**

An electronic apparatus including: a memory storing instructions; and at least one processor configured to execute the instructions, wherein, by executing the instructions, the at least one processor is configured to: acquire an input image, acquire line map information indicating positions of a plurality of lines in the input image, acquire two-dimensional (2D) grid map information including a plurality of grids corresponding to the input image, identify a target line intersecting the plurality of grids included in the 2D grid map information among the plurality of lines included in the line map information, identify a size of the target line, identify a degree of radial distortion of the target line based on the size of the target line, perform distortion correction on the target line based on the degree of radial distortion, and acquire a corrected image corresponding to the input image based on the distortion correction.

## Description

### [TECHNICAL FIELD]

The present disclosure relates to an electronic apparatus and a controlling method thereof, and more particularly, to an electronic apparatus that corrects image distortion, and a controlling method thereof.

### [BACKGROUND ART]

A captured image may be distorted based on a feature of a lens used for capturing an image. For example, an image captured using a wide-angle lens may express a subject more widely. Distortion correction may be applied to the image to correct the distortion caused by the lens feature.

A correction method may be performed by first identifying a user face region, and correcting the distortion occurring in the face region to correct the image distortion. However, a distortion processing time may become unnecessarily long if it is difficult to identify the user face region or if there are many user face regions.

The distortion correction may be performed based on the center of the image if the distortion correction is performed without identifying the user face region. The farther away from the center of the image, the more severe the distortion, and a portion farther from the center of the image may thus require more correction than a portion closer to the center of the image. However, the quality or speed of the correction may be lower if the image correction is performed in batches.

### [DISCLOSURE]

### [TECHNICAL SOLUTION]

The present disclosure provides an electronic apparatus that first detects a line in an image and then corrects image distortion by using the detected line, and a controlling method thereof.

Additional aspects will be set forth in part in the description which follows and, in part, will be apparent from the description, or may be learned by practice of the presented embodiments.

According to an aspect of the disclosure, an electronic apparatus may include: a memory storing instructions; and at least one processor configured to execute the instructions, wherein, by executing the instructions, the at least one processor is configured to: acquire an input image, acquire line map information indicating positions of a plurality of lines in the input image, acquire two-dimensional (2D) grid map information including a plurality of grids corresponding to the input image, identify a target line intersecting the plurality of grids included in the 2D grid map information among the plurality of lines included in the line map information, identify a size of the target line, identify a degree of radial distortion of the target line based on the size of the target line, perform distortion correction on the target line based on the degree of radial distortion, and acquire a corrected image corresponding to the input image based on the distortion correction.

The at least one processor may be further configured to change a curved line to a straight line based on the curved line being identified in the line map information, and update the line map information based on the changed straight line.

The at least one processor may be further configured to change a position of a grid among the plurality of grids based on a position of a line among the plurality of lines.

The at least one processor may be further configured to identify a region in the input image at which a line is not identified among the plurality of lines, and remove a grid corresponding to the region at which a line is not identified from the 2D grid map information.

The at least one processor may be further configured to acquire distortion map information about a degree of radial distortion of a plurality of target lines identified in the input image, and perform distortion correction on the plurality of target lines based on the distortion map information.

The at least one processor may be further configured to identify position information about a target region at which the distortion correction is to be performed based on the distortion map information, acquire transpose mask map information based on the position information about the target region, and perform the distortion correction based on the transpose mask map information.

The at least one processor may be further configured to identify a reference point corresponding to the target line and a distortion point corresponding to the target line, acquire a first distance from the reference point to the distortion point, acquire a second distance from the reference point to an undistortion point corresponding to the target line, based on the first distance and a lens coefficient corresponding to the input image, and perform the distortion correction based on the first distance and the second distance.

The at least one processor may be further configured to acquire a third distance from the reference point to a stereoscopic projection position based on the first distance, the second distance, and a position of the target line, acquire a fourth distance from the reference point to a perspective-stereographic projection position based on the third distance and the lens coefficient, and perform the distortion correction based on the third distance and the fourth distance.

The at least one processor may be further configured to perform the distortion correction by changing the distortion point corresponding to the target line to the perspective-stereographic projection position corresponding to the fourth distance.

The apparatus may further include a camera comprising a wide-angle lens, wherein the at least one processor may be further configured to acquire the input image by using the camera comprising the wide-angle lens.

According to an aspect of the disclosure, provided is a controlling method of an electronic apparatus, the method may include: acquiring an input image; acquiring line map information indicating positions of a plurality of lines in the input image; acquiring two-dimensional (2D) grid map information including a plurality of grids corresponding to the input image; identifying a target line intersecting the plurality of grids included in the 2D grid map information among the plurality of lines included in the line map information; identifying a size of the target line; identifying a degree of radial distortion of the target line based on the size of the target line; performing distortion correction on the target line based on the degree of radial distortion; and acquiring a corrected image corresponding to the input image based on the distortion correction.

The method may further include changing a curved line to a straight line based on the curved line being identified in the line map information; and updating the line map information based on the changed straight line.

The method may further include changing a position of a grid among the plurality of grids based on a position of a line among the plurality of lines.

The method may further include identifying a region in the input image at which a line is not identified among the plurality of lines; and removing a grid corresponding to the region at which a line is not identified from the 2D grid map information.

The method may further include acquiring distortion map information about a degree of radial distortion of a plurality of target lines identified in the input image, wherein in the performing of the distortion correction, the distortion correction is performed on the plurality of target lines based on the distortion map information.

### [DESCRIPTION OF DRAWINGS]

The above and other aspects, features, and advantages of certain embodiments of the present disclosure will be more apparent from the following description taken in conjunction with the accompanying drawings, in which:
FIG. 1 is a view for explaining an image correction operation according to an embodiment;
FIG. 2 is a block diagram showing an electronic apparatus according to an embodiment;
FIG. 3 is a block diagram for explaining a configuration of the electronic apparatus of FIG. 2 according to an embodiment;
FIG. 4 is a view for explaining object distortion according to an embodiment.
FIG. 5 is a view for explaining a distortion correction operation on a face region according to an embodiment.
FIG. 6 is a view for explaining the distortion correction operation performed after line detection according to an embodiment;
FIG. 7 is a view for explaining an operation of performing perspective-stereographic correction to remove the distortion according to an embodiment;
FIG. 8 is a view for explaining a calculation process of image correction according to an embodiment;
FIG. 9 is a view for explaining an image correction operation according to an embodiment;
FIG. 10 is a view for explaining an image correction operation according to an embodiment;
FIG. 11 is a view for explaining an image correction operation according to an embodiment;
FIG. 12 is a view for explaining a two-dimensional (2D) grid for an input image according to an embodiment;
FIG. 13 is a view for explaining the image correction operation using a mask according to an embodiment;
FIG. 14 is a view for explaining a correction operation on a video where an object is moved according to an embodiment;
FIG. 15 is a view for explaining a line detection operation according to an embodiment;
FIG. 16 is a view for explaining an image correction operation according to an embodiment'
FIG. 17 is a view for explaining a mesh transformation process according to an embodiment;
FIG. 18 is a view for explaining an image correction result according to an embodiment;
FIG. 19 is a view for explaining the image correction operation performed based on the line detection and the mask according to an embodiment;
FIG. 20 is a view for explaining an image correction operation according to an embodiment;
FIG. 21 is a view for explaining a mesh transformation process according to an embodiment;
FIG. 22 is a view for explaining an image correction result according to an embodiment;
FIG. 23 is a view for explaining a device that may apply the image correction according to an embodiment;
FIG. 24 is a view for explaining a device that may apply the image correction according to an embodiment; and
FIG. 25 is a view for explaining a controlling method of an electronic apparatus according to an embodiment.

### [Mode for Invention]

Hereinafter, the present disclosure is described in detail with reference to the accompanying drawings.

General terms currently widely used in the art are selected as terms to describe the embodiments of the present disclosure in consideration of their functions in the present disclosure, and may be changed based on the intentions of those skilled in the art or a judicial precedent, the emergence of a new technique, or the like. In addition, in a specific case, terms arbitrarily chosen by an applicant may exist. In this case, the meanings of such terms are mentioned in detail in corresponding description portions of the disclosure. Therefore, the terms used in the present disclosure should be defined on the basis of the meanings of the terms and the contents throughout the present disclosure rather than simple names of the terms.

In the specification, an expression "have", "may have", "include", "may include", "comprise", "may comprise" or the like, indicates existence of a corresponding feature (for example, a numerical value, a function, an operation, or a component such as a part), and does not exclude existence of an additional feature.

An expression, "at least one of A or/and B" may indicate either "A or B", or "both of A and B". The term "or" includes any and all combinations of one or more of a plurality of associated listed items.

Expressions "first", "second", or the like, used in the specification may indicate various components regardless of the sequence and/or importance of the components. These expressions are used only to distinguish one component and another component from each other, and do not limit the corresponding components.

In case that any component (for example, a first component) is mentioned to be "(operatively or communicatively) coupled with/to" or "connected to" another component (for example, a second component), it is to be understood that any component may be directly coupled to another component or may be coupled to another component through still another component (for example, a third component).

A term of a singular number may include its plural number unless explicitly indicated otherwise in the context. It is to be understood that a term "include", "formed of", or the like used in this application specifies the presence of features, numerals, steps, operations, components, parts, or combinations thereof, mentioned in the specification, and does not preclude the presence or addition of one or more other features, numerals, steps, operations, components, parts, or combinations thereof.

In the present disclosure, a "module" or a "~er/~or" may perform at least one function or operation, and be implemented by hardware, software, or a combination of hardware and software. In addition, a plurality of "modules" or a plurality of "~ers/~ors" may be integrated into at least one module and implemented by at least one processor, except for a "module" or a "~er/or" that needs to be implemented by specific hardware.

In the specification, a term "user" may refer to a person using an electronic apparatus or an apparatus (e.g., artificial intelligence electronics) using the electronic apparatus.

Hereinafter, an embodiment of the present disclosure is described in detail with reference to the accompanying drawings.

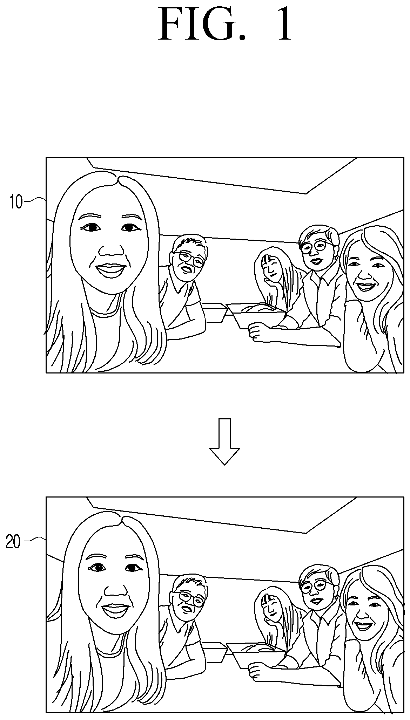

FIG. 1 is a view for explaining an image correction operation according to an embodiment.

Referring to FIG. 1, an electronic apparatus 100 may receive an input image 10. The input image 10 may include distortion. The distortion may occur based on a feature of a camera lens. A subject may exist in a three-dimensional space, while the image acquired through a camera may be two-dimensional. The distortion may occur in the subject or a portion of the subject that is captured in the two-dimensional (2D) image.

The electronic apparatus 100 may correct the distortion included in the input image 10. The electronic apparatus 100 may acquire a corrected image 20 as a correction result. The electronic apparatus 100 may use various algorithms to remove the distortion included in an input image.

The electronic apparatus 100 may be implemented as a smartphone, a tablet computer, a wearable device including a camera, a television (TV), a laptop computer, a desktop computer, augmented reality (AR) or virtual reality (VR) glasses, a head-mounted display (HMD) device, a video camera, or the like.

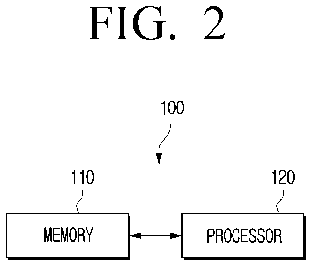

FIG. 2 is a block diagram showing an electronic apparatus 100 according to an embodiment.

Referring to FIG. 2, the electronic apparatus 100 may include at least one of a memory 110 and at least one processor 120.

The memory 110 may store the input image. The memory 110 may store a distortion correction model performing the distortion correction. At least one processor 120 may perform the distortion correction on the input image by using the distortion correction model stored in the memory 110. The distortion correction model may be an artificial intelligence model. The distortion correction model may include at least one of a recurrent neural network (RNN) module or a convolutional neural network (CNN) module. The distortion correction model may receive the input image as input data, and acquire the corrected image where the distortion is corrected as output data.

At least one processor 120 may acquire the input image, acquire two-dimensional (2D) grid map information including a plurality of grids corresponding to the input image, identify a target line intersecting the plurality of grids included in the 2D grid map information among a plurality of lines included in line map information, identify a target line size, identify a radial distortion degree of the target line based on the target line size, perform the distortion correction on the target line based on the distortion degree, and acquire the corrected image corresponding to the input image based on the distortion correction.

At least one processor 120 may acquire the input data.

For example, at least one processor 120 may acquire the input image through a camera 190 included in the electronic apparatus 100. At least one processor 120 may acquire the captured image by the camera 190. At least one processor 120 may acquire the captured image as the input image. At least one processor 120 may acquire the corrected image by inputting the input image to the distortion correction model stored in the memory 110.

For example, at least one processor 120 may receive the input image through an external device (or external server) connected to the electronic apparatus 100. At least one processor 120 may be connected to the external device (or the external server) through a communication interface 130.

At least one processor 120 may acquire the line map information indicating positions of the plurality of lines in the input image.

At least one processor 120 may identify the line (or a line object) by analyzing the input image. At least one processor 120 may identify the plurality of lines by analyzing the input image. At least one processor 120 may identify the position of each of the plurality of lines identified in the input image. At least one processor 120 may acquire (or generate) the line map information indicating the position of each of the plurality of lines.

The line may include a straight line and/or a curved line. At least one processor 120 may identify whether the input image includes the straight line or the curved line. The straight line may be classified as a first type, and the curved line may be classified as a second type.

The line map information may be information indicating the line position. At least one processor 120 may generate the line map information by using an input image size (or coordinates). For example, if the input image size is 100*100 (pixels), a line map information size may also be 100*100.

The line map information may include coordinates at which at least one line is located in all the input image coordinates.

The line map information may be described as line information, a line map, line data, line position information, a line position, or the like.

At least one processor 120 may acquire the 2D grid map information including the plurality of grids corresponding to the input image.

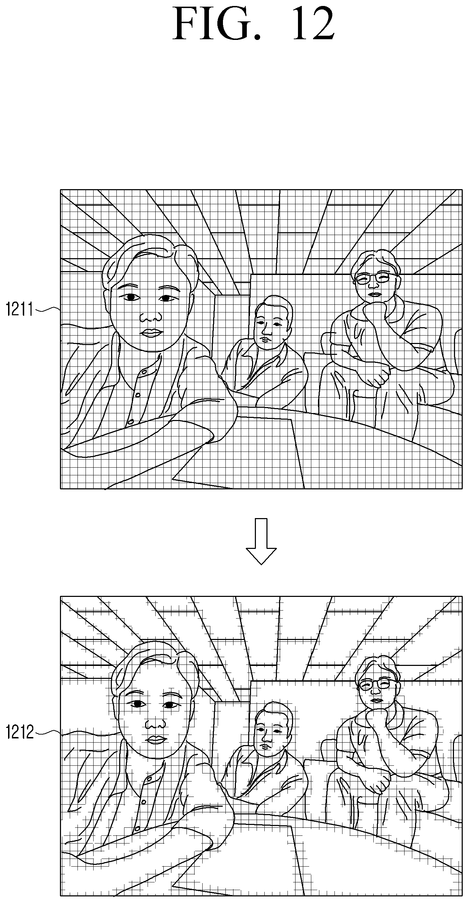

The grid may be a line or pattern that is divided into a predetermined size (or unit). The grid may be a guide line or guide pattern for divided the image into the predetermined units. A 2D grid may be a grid used in two dimensions. An example of the 2D grid is described with reference to FIG. 12.

At least one processor 120 may acquire the 2D grid map information including the plurality of grids for dividing the input image.

The plurality of grids may include a vertical grid and a horizontal grid. The plurality of grids may form a lattice pattern in case that the vertical line and the horizontal line intersect each other.

The 2D grid map information may be information indicating the line position. At least one processor 120 may generate the 2D grid map information by using the input image size (or coordinates). For example, if the input image size is 100*100 (pixels), a 2D grid map information size may also be 100*100.

For example, one grid may be the vertical grid line or the horizontal grid line. The grid may be described as a grid line.

For example, one grid may be one lattice pattern formed by intersecting the vertical line and the horizontal line with each other. The grid may be described as a grid pattern.

At least one processor 120 may identify the target line intersecting the plurality of grids included in the 2D grid map information among the plurality of lines included in the line map information.

At least one processor 120 may identify whether one of the plurality of lines included in the line map information intersects the grid. At least one processor 120 may compare the position of each of the plurality of lines included in the line map information with a position of each of the plurality of grids included in the 2D grid map information.

At least one processor 120 may compare the line position with the grid position. At least one processor 120 may identify the corresponding line as the target line if a position of a first line among the plurality of lines and a position of a first grid among the plurality of grids are the same with each other. At least one processor 120 may identify the plurality of target lines in the input image.

At least one processor 120 may identify the target line size.

At least one processor 120 may identify the total size (or total length) of the target line that intersects the grid. One target line may intersect the grid multiple times. At least one processor 120 may identify the total length of the target line regardless of the number of intersections.

At least one processor 120 may identify the radial distortion degree of the target line based on the target line size.

At least one processor 120 may identify (or acquire or calculate) the radial distortion degree, which indicates the distortion degree of the target line, by using the target line size. A larger target line size may correspond with a larger radial distortion degree. The electronic apparatus 100 may identify a general distortion degree rather than the radial distortion degree. The radial distortion degree may be described as the distortion degree.

At least one processor 120 may perform the distortion correction on the target line based on the radial distortion degree.

At least one processor 120 may perform the distortion correction to remove (or reduce) the distortion occurring in the target line. At least one processor 120 may change a length of the target line. At least one processor 120 may change a position of an end point (or edge point) of the target line to reduce the length of the target line. At least one processor 120 may change the edge point to be closer to (or farther from) a reference point.

For example, at least one processor 120 may change a first edge point of the target line to its second edge point. A distance from the reference point to the second edge point may be changed more than a distance from the reference point to the first edge point. The distortion may be corrected based on the change of the edge point.

At least one processor 120 may acquire the corrected image corresponding to the input image based on the distortion correction.

At least one processor 120 may acquire the corrected image by performing the distortion correction on the input image. At least one processor 120 may input (or provide) the input image into (or to) the distortion correction model stored in the memory 110. At least one processor 120 may acquire the corrected image in which the distortion is corrected from the distortion correction model.

At least one processor 120 may change the curved line to the straight line if the curved line is identified in the line map information, and update the line map information based on the changed straight line.

In case of identifying the curved line in the input image, at least one processor 120 may perform the correction that changes the curved line to the straight line. At least one processor 120 may determine the target line indicating the curved line, and change a line model (or a line function) that forms the target line to indicate the straight line.

For example, an operation of changing the curved line to the straight line may include an operation of changing the curved line to a straight line type in each predetermined unit. For example, the curved line of 5 cm may be changed into 5 straight lines distinguished from each other by every 1 cm.

For example, the operation of changing the curved line to the straight line may include an operation of connecting the edge points of the target line to each other by using the straight line. For example, the curved line extending from a first position to a second position may be changed to the straight line connecting the first position and the second position to each other.

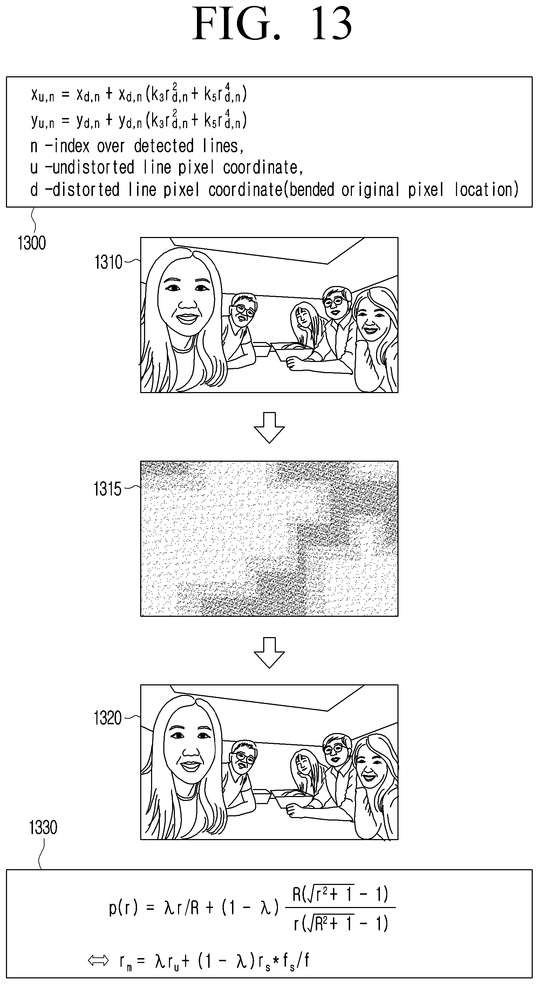

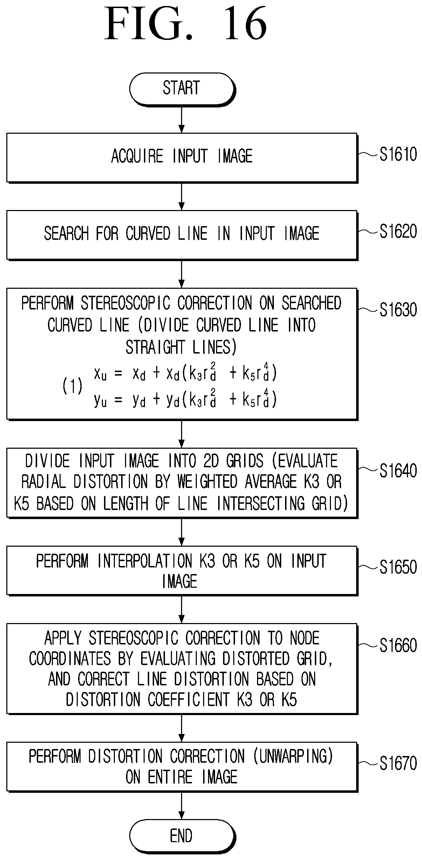

The operation of changing the curved line to the straight line may be performed based on Equation 1300 of FIG. 13. The operation of changing the curved line to the straight line may be performed based on step S1630 of FIG. 16.

At least one processor 120 may update the line map information after changing the curved line to the straight line. The updated line map information may not include information indicating a curved line type.

At least one processor 120 may change the position of the grid included in the 2D grid map information based on the line position included in the line map information.

At least one processor 120 may align the grid positions included in the 2D grid map information. An initially generated grid may be generated in a predetermined unit. For example, the 2D grid map information having the size of 100* 100 may include nine vertical grids and nine horizontal grids. A spacing between the respective grids may be 10 (pixels).

At least one processor 120 may change the grid position for the line position included in the line map information and the grid position included in the 2D grid map information to be the same as each other.

For example, at least one processor 120 may change the position of each grid.

For example, at least one processor 120 may change a position of a representative grid. The representative grid may be changed based on a user setting.

At least one processor 120 may identify the line having the closest distance to the grid. At least one processor 120 may change the grid position to a position of the line having the closest distance to the grid. This position change operation may be applied to each grid.

A line alignment operation may not be mandatory. The line alignment operation may be omitted.

At least one processor 120 may identify a region at which the line is not identified in the line map information, and remove the grid corresponding to the region where the line is not identified from the 2D grid map information.

At least one processor 120 may identify the region (or coordinates) where the line is not identified based on the line map information. At least one processor 120 may remove the grid that exists in the identified region (or coordinates). At least one processor 120 may change (or update) the 2D grid map information to ensure that the grid is not included in region where the line is not identified.

For example, at least one processor 120 may remove only a portion of the grid in a region in which the line is not identified among the vertical grid or the horizontal grid. At least one processor 120 may not remove every horizontal line or vertical grid.

For example, at least one processor 120 may remove a pattern grid in the region where the line is not identified among a plurality of pattern grids.

The grid removal operation is described with reference to FIG. 12.

At least one processor 120 may acquire distortion map information indicating each distortion degree of the plurality of target lines included in the input image, and perform the distortion correction based on the distortion map information.

At least one processor 120 may acquire (or generate) the distortion map information indicating the distortion degree of the entire input image. At least one processor 120 may identify the target line included in the input image, and acquire the distortion map information indicating the distortion degree of each target line.

The distortion map information may be information indicating the line position. At least one processor 120 may generate the distortion map information by using the input image size (or coordinates). For example, if the input image size is 100* 100 (pixels), the distortion map information size may also be 100*100.

At least one processor 120 may identify the position information of a target region at which the distortion correction is to be performed based on the distortion map information, acquire transpose mask map information based on the position information of the target region, and perform the distortion correction based on the transpose mask map information.

At least one processor 120 may determine whether the distortion degree included in the distortion map information is a critical value or more. At least one processor 120 may perform the distortion correction only on the target line having the distortion degree of the critical value or more. At least one processor 120 may identify the target line having the distortion degree of the critical value or more, and perform the distortion correction only on the identified target line.

At least one processor 120 may identify the target region including the target line having the critical value or more. At least one processor 120 may acquire the transpose mask map information that indicates the position of the target region.

A transpose mask may indicate a tool necessary to correct the image. The transpose mask may be filtering information for specifying a region where the image correction is to be performed. The transpose mask may indicate a region for specifying the position of the target region where the image correction is to be performed.

The transpose mask map information may include information on the target region in the input image, where the distortion correction is to be performed.

The transpose mask map information may be information indicating the line position. At least one processor 120 may generate the transpose mask map information by using the input image size (or coordinates). For example, if the input image size is 100*100 (pixels), a transpose mask map information size may also be 100*100.

The transpose mask map information is described with reference to FIGS. 13, 19, and 20.

At least one processor 120 may identify a reference point Po corresponding to the target line and a distortion point Pd corresponding to the target line.

At least one processor 120 may acquire a first distance rd from the reference point Po to the distortion point Pd.

At least one processor 120 may acquire a second distance ru from the reference point Po to an undistortion point corresponding to the target line based on the first distance rd and a lens coefficient corresponding to the input image.

At least one processor 120 may perform the distortion correction based on the first distance rd and the second distance ru.

At least one processor 120 may acquire a third distance rs from the reference point Po to a stereoscopic projection position Ps based on the first distance rd, the second distance ru, and a position of the target line.

At least one processor 120 may acquire a fourth distance rm from the reference point Po to a perspective-stereographic projection position Pm based on the third distance rs and the lens coefficient.

At least one processor 120 may perform the distortion correction based on the third distance rs and the fourth distance rm.

At least one processor 120 may perform the distortion correction by changing the distortion point Pd corresponding to the target line to the perspective-stereographic projection position Pm corresponding to the fourth distance rm.

At least one processor 120 may change the distortion point Pd, which is the first edge point of the target line, to the perspective-stereographic projection position Pm, which is the second edge point of the target line.

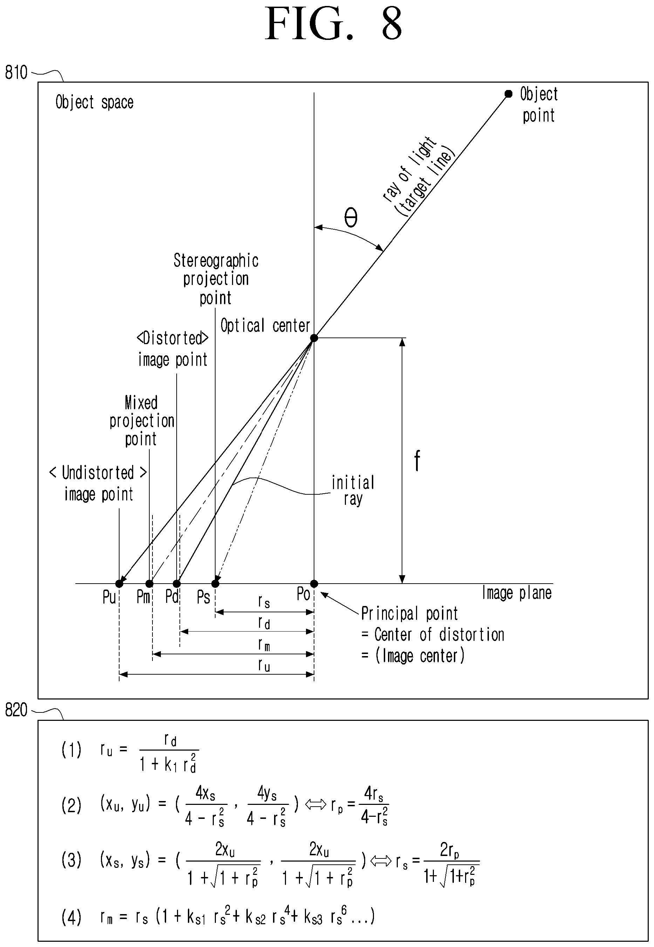

An operation of changing the edge point is described with reference to FIGS. 8 to 11.

The electronic apparatus 100 may further include a camera including a wide-angle lens. At least one processor 120 may acquire the input image by using the camera including the wide-angle lens. The wide-angle lens may be a lens whose field of view is a critical angle or more. The input image may be a wide-angle image.

The electronic apparatus 100 may include the camera including an ultra wide lens. The ultra wide lens may be a lens having a field of view of 90 degrees or more.

The electronic apparatus 100 may perform the distortion correction on the user face region where the distortion occurs without separately identifying the user face region. The electronic apparatus 100 does not have to separately identify the user face region, thus reducing its processing time.

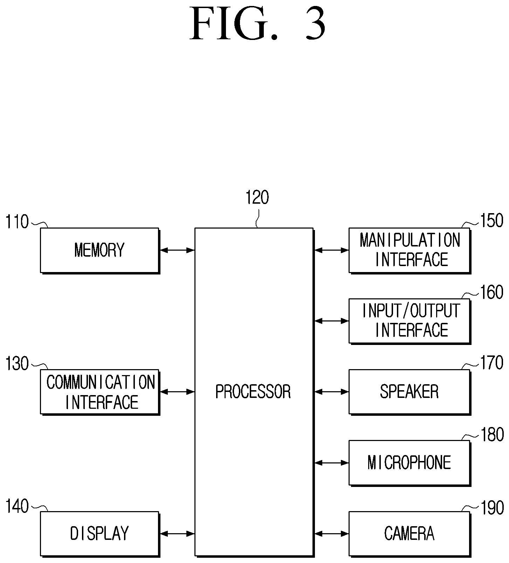

FIG. 3 is a block diagram for explaining a specific configuration of the electronic apparatus of FIG. 2 according to an embodiment.

FIG. 3 is a block diagram for explaining the specific configuration of the electronic apparatus 100 of FIG.2.

Referring to FIG. 3, the electronic apparatus 100 may include at least one of the memory 110, at least one processor 120, the communication interface 130, a display 140, a manipulation interface 150, an input/output interface 160, a speaker 170, a microphone 180, and the camera 190.

The memory 110 may be implemented as an internal memory such as a read-only memory (ROM, e.g., electrically erasable programmable read-only memory (EEPROM)) or a random access memory (RAM), included in at least one processor 120, or as a memory separate from at least one processor 120. In this case, the memory 110 may be implemented in the form of a memory embedded in the electronic apparatus 100 or in the form of a memory detachable from the electronic apparatus 100, based on a data storage purpose. For example, data for driving the electronic apparatus 100 may be stored in the memory embedded in the electronic apparatus 100, and data for an extension function of the electronic apparatus 100 may be stored in the memory detachable from the electronic apparatus 100.

The memory embedded in the electronic apparatus 100 may be implemented as at least one of a volatile memory (e.g., dynamic RAM (DRAM), static RAM (SRAM) or synchronous dynamic RAM (SDRAM)) or a non-volatile memory (e.g., one time programmable ROM (OTPROM), programmable ROM (PROM), erasable and programmable ROM (EPROM), electrically erasable and programmable ROM (EEPROM), a mask ROM, a flash ROM, a flash memory (e.g., NAND flash or NOR flash), a hard drive, or a solid state drive (SSD)); and the memory detachable from the electronic apparatus 100 may be implemented as a memory card (e.g., compact flash (CF), secure digital (SD), micro secure digital (Micro-SD), mini secure digital (mini-SD), extreme digital (xD), or multi-media card (MMC)), an external memory which may be connected to a universal serial bus (USB) port (e.g., USB memory), or the like.

At least one processor 120 may perform overall control operations of the electronic apparatus 100. At least one processor 120 may function to control overall operations of the electronic apparatus 100.

At least one processor 120 may be implemented as a digital signal processor (DSP) that processes a digital signal, a microprocessor, or a time controller (TCON). However, the processor 120 is not limited thereto, and may include at least one of a central processing unit (CPU), a micro controller unit (MCU), a micro processing unit (MPU), a controller, an application processor (AP), a graphics-processing unit (GPU), a communication processor (CP), or an advanced reduced instruction set computer (RISC) machine (ARM) processor, or may be defined by these terms. At least one processor 120 may be implemented as a system-on-chip (SoC), in which a processing algorithm is embedded, a large scale integration (LSI), or may be implemented in the form of a field programmable gate array (FPGA). At least one processor 120 may perform various functions by executing computer executable instructions stored in the memory 110.

The communication interface 130 may be a component that communicates with the various types of external devices by using various types of communication methods. The communication interface 114 may include a wireless communication module or a wired communication module. Each communication module may be implemented in the form of at least one hardware chip.

The wireless communication module may be a module that communicates with the external device in a wireless manner. For example, the wireless communication module may include at least one of a wireless-fidelity (Wi-Fi) module, a Bluetooth module, an infrared communication module, or other communication modules.

The Wi-Fi module and the Bluetooth module may respectively perform the communication in a Wi-Fi manner and a Bluetooth manner. In case of using the Wi-Fi module or the Bluetooth module, the communication interface may first transmit and receive various connection information such as a service set identifier (SSID) or a session key, connect the communication by using this connection information, and then transmit and receive various information.

The infrared communication module may perform the communication based on infrared data association (IrDA) technology that transmits data in a short distance in the wireless manner by using an infrared ray between visible and millimeter waves.

In addition to the above-described communication manners, other communication modules may include at least one communication chip performing the communication based on various wireless communication standards such as zigbee, third generation (3G), third generation partnership project (3GPP), long term evolution (LTE), LTE advanced (LTE-A), fourth generation (4G), and fifth generation (5G).

The wired communication module may be a module communicating with the external device in a wired manner. For example, the wired communication module may include at least one of a local area network (LAN) module, an Ethernet module, a pair cable, a coaxial cable, an optical fiber cable, or an ultra wide-band (UWB) module.

For example, the communication interface 130 may use the same communication module (for example, the Wi-Fi module) to communicate with the external device, such as a remote control device, and the external server.

For example, the communication interface 130 may use a different communication module to communicate with the external device such as the remote control device or the external server. For example, the communication interface 130 may use at least one of the Ethernet module or the Wi-Fi module to communicate with the external server, and may use the Bluetooth module to communicate with the external device such as the remote control device. However, this case is only an embodiment, and the communication interface 130 may use at least one communication module among various communication modules in case of communicating with the plurality of external devices or external servers.

The display 140 may be implemented as various types of displays such as a liquid crystal display (LCD), an organic light emitting diode (OLED) display, a plasma display panel (PDP). The display 140 may include a driving circuit, a backlight unit, and the like, which may be implemented in a form such as an amorphous silicon thin film transistor (a-si TFT), a low temperature poly silicon (LTPS) TFT, or an organic TFT (OTFT). The display may be implemented in a touch screen combined with a touch sensor, a flexible display, a three-dimensional (3D) display, or the like. According to an embodiment of the present disclosure, the display 140 may include a bezel housing a display panel as well as the display panel outputting the image. The bezel may include the touch sensor configured to detect user interaction according to an embodiment of the present disclosure.

According to an embodiment, the electronic apparatus 100 may include the display 140. The electronic apparatus 100 may directly display the acquired image or content on the display 140.

According to an embodiment, the electronic apparatus 100 may not include the display 140. The electronic apparatus 100 may be connected to an external display device, and may transmit the image or content stored in the electronic apparatus 100 to the external display device. The electronic apparatus 100 may transmit the image or content to the external display device together with a control signal for controlling the image or content to be displayed on the external display device. The external display device may be connected to the electronic apparatus 100 through the communication interface 130 or the input/output interface 160. For example, the electronic apparatus 100 may not include the display, such as a set top box (STB). The electronic apparatus 100 may include only a small display capable of displaying simple information such as text information. The electronic apparatus 100 may transmit the image or content to the external display device through the communication interface 130 in a wired manner or a wirelessly manner, or transmit the image or content to the external display device through the input/output interface 160.

The manipulation interface 150 may be implemented in a device such as a button, a touch pad, a mouse and a keyboard, or may be implemented in a touch screen capable of also performing an operation input function in addition to the above-described display function. The button may be any of various types of buttons such as a mechanical button, a touch pad, a wheel or the like, which is positioned in any region, such as a front surface portion, a side surface portion or a rear surface portion, of a body appearance of the electronic apparatus100. The input/output interface 160 may be any of a high definition multimedia interface (HDMI), a mobile high-definition link (MHL), a universal serial bus (USB), a display port (DP), a thunderbolt, a video graphics array (VGA) port, a red-green-blue (RGB) port, a D-subminiature (D-SUB) or a digital visual interface (DVI). The input/output interface 160 may input/output at least one of audio or video signals. According to an implementation example, the input/output interface 160 may include a port for inputting and outputting only an audio signal and a port for inputting and outputting only a video signal as its separate ports, or may be implemented as a single port for inputting and outputting both the audio signal and the video signal.

The electronic apparatus 100 may transmit at least one of the audio signal or the video signal to the external device (for example, the external display device or an external speaker) through the input/output interface 160. An output port included in the input/output interface 160 may be connected to the external device, and the electronic apparatus 100 may transmit at least one of the audio signal or the video signal to the external device through the output port.

The input/output interface 160 may be connected to the communication interface. The input/output interface 160 may transmit information received from the external device to the communication interface, or transmit information received through the communication interface to the external device.

The speaker 170 may be a component for outputting various audio data such as various notification sounds or voice messages.

The microphone 180 may be a component for receiving a user voice or another sound, and converting the same into the audio data. The microphone 180 may receive the user voice while activated. For example, the microphone 180 may be integrated with the upper, front, side, or the like of the electronic apparatus 100. The microphone 180 may include various components such as a microphone collecting the user voice in an analog form, an amplifier circuit amplifying the collected user voice, an analog to digital (A/D) conversion circuit sampling the amplified user voice and converting the same into the digital signal, a filter circuit removing a noise component from the converted digital signal, and the like.

The camera 190 may be a component capturing the subject and generating the captured image, and the captured image is a concept that includes both video and still images. The camera 190 may acquire the image of at least one external device, and may be implemented as the camera, the lens, an infrared sensor, or the like.

The camera 190 may include the lens and the image sensor. A type of lens may include a general-purpose lens, the wide-angle lens, a zoom lens, or the like, and may be determined based on the type, feature, and usage environment of the electronic apparatus 100. The image sensor may use a complementary metal oxide semiconductor (CMOS), a charge coupled device (CCD), or the like.

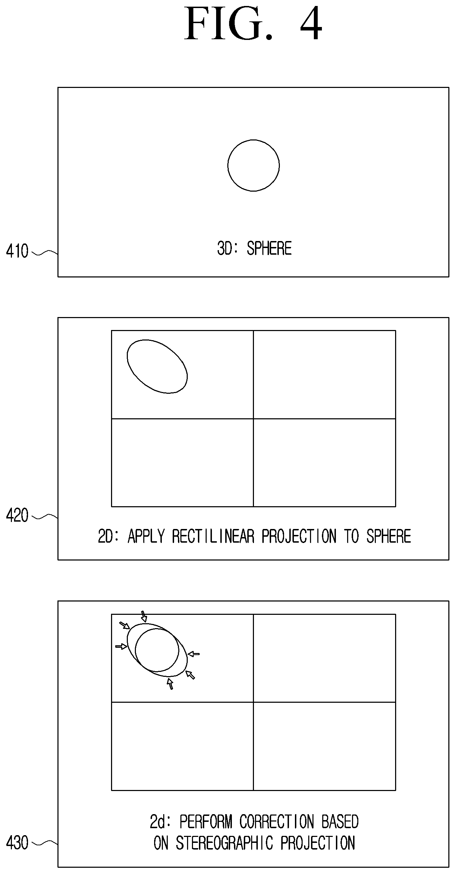

FIG. 4 is a view for explaining object distortion according to an embodiment.

Embodiment 410 of FIG. 4 shows a sphere in a three-dimensional space. Assume that the sphere having three-dimensional coordinates exists.

Embodiment 420 of FIG. 4 shows that the sphere of Embodiment 410 is expressed in the two dimensions. In case of applying rectilinear projection in a two-dimensional space to a three-dimensional sphere, a shape of the sphere may be an ellipse. The reason is that the distortion occurs due to the rectilinear projection.

Referring to Embodiment 430 of FIG. 4, the electronic apparatus 100 may correct the ellipse into a circle to remove the distortion. The electronic apparatus 100 may remove the distortion based on stereographic projection. In case of correcting the ellipse included in Embodiment 420 into the circle, a corrected empty space may occur. If the empty space occurs near a boundary of the ellipse, the electronic apparatus 100 may expand a surrounding background of the empty space. The electronic apparatus 100 may fill the empty space with the surrounding background. The electronic apparatus 100 may perform the correction operation by optimizing a mesh grid loss function.

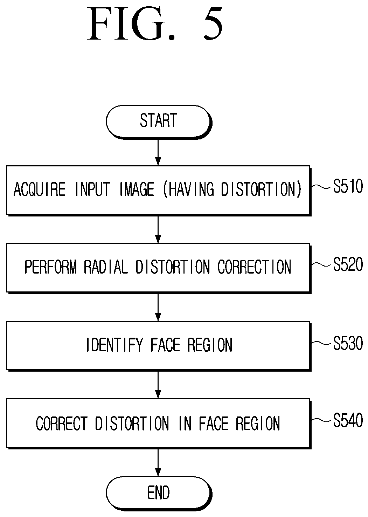

FIG. 5 is a view for explaining the distortion correction operation on the face region according to an embodiment.

Referring to FIG. 5, the electronic apparatus 100 may first identify the face region in correcting the image. The electronic apparatus 100 may acquire the input image (S510). The input image may have the distortion.

The electronic apparatus 100 may perform radial distortion correction (S520). The radial distortion correction may include an operation of correcting the distortion caused by the lens based on the center of the image.

The electronic apparatus 100 may identify the face region (S530). The face region may be a region that includes a human face.

For example, the electronic apparatus 100 may identify the face region in the input image.

For example, the electronic apparatus 100 may identify the face region in a first corrected image acquired based on the correction result performed in step S520. The electronic apparatus 100 may acquire position information (or coordinate information) of the face region.

The electronic apparatus 100 may correct the distortion based on the identified face region (S540). The electronic apparatus 100 may correct the distortion existing in the face region based on the position of the identified face region.

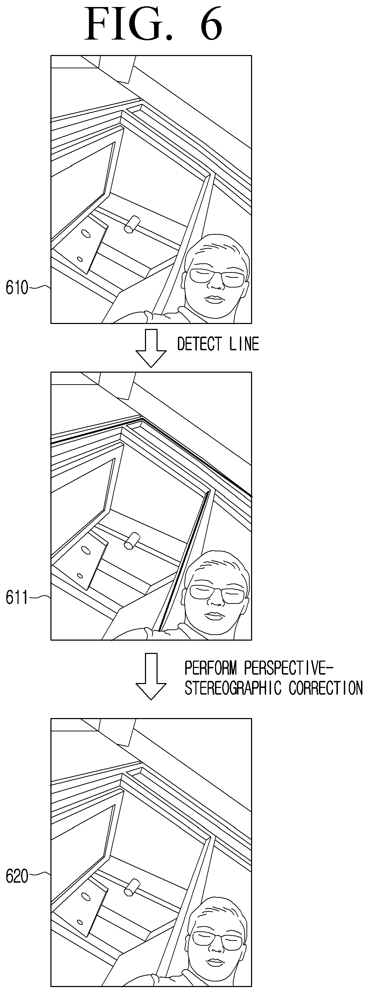

FIG. 6 is a view for explaining the distortion correction operation performed after line detection according to an embodiment.

Referring to FIG. 6, the electronic apparatus 100 may acquire an input image 610. The input image 610 may include the distortion.

Referring to image 611, the electronic apparatus 100 may detect the line in the input image 610. The line may be described as an edge. The electronic apparatus 100 may acquire the line position information by detecting the line included in the image.

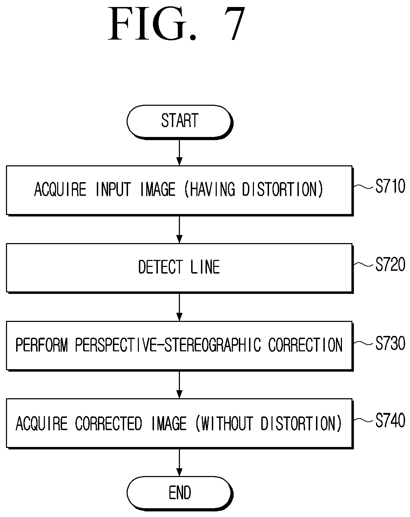

The electronic apparatus 100 may perform perspective-stereoscopic correction based on the input image 610 and the detected line position. The perspective-stereoscopic correction is described with reference to FIGS. 7 and 8. The electronic apparatus 100 may acquire a corrected image 620 from which the distortion is removed using the perspective-stereoscopic correction.

FIG. 7 is a view for explaining an operation of performing the perspective-stereographic correction to remove the distortion according to an embodiment.

Referring to FIG. 7, the electronic apparatus 100 may acquire the input image (S710). The electronic apparatus 100 may detect the line in the input image (S720). The electronic apparatus 100 may acquire the position information of the detected line. The electronic apparatus 100 may acquire the line position information (or coordinate information) indicating where the line is positioned in the input image.

The electronic apparatus 100 may perform the perspective-stereographic correction based on the input image and the line position information (S730).

The perspective-stereographic correction may include perspective correction and stereoscopic correction. The perspective correction may include an operation of performing the correction based on perspective. The stereoscopic correction may be a correction of removing the distortion that occurs while expressing a three-dimensional object in the two-dimensional space. The perspective-stereographic correction may be described as a mixture of the perspective correction and the stereographic correction.

For example, the electronic apparatus 100 may perform the perspective correction first and then the stereoscopic correction.

For example, the electronic apparatus 100 may perform the stereoscopic correction first and then the perspective correction.

For example, the electronic apparatus 100 may perform the perspective correction and the stereoscopic correction together.

The electronic apparatus 100 may acquire the corrected image from which the distortion is removed using the perspective-stereographic correction (S740).

FIG. 8 is a view for explaining a calculation process of the image correction according to an embodiment.

Referring to Embodiment 810 of FIG. 8, the electronic apparatus 100 may identify an optical center and an object position in an object space.

Embodiment 810 shows a plane through which an input ray passes with respect to a distorted pixel and a principal optical axis. For example, the input ray may represent a target line among the plurality of lines. The plane may intersect other projections and be orthogonal to an XY plane (image plane). The correction may proceed in a radial direction.

The electronic apparatus 100 may identify, from the optical center, an image center point (or a principal point) Po, the distortion point (or a point of the distorted image or a distorted image point) Pd, and the undistortion point (or an image point without distortion or undistorted image point) Pu. The electronic apparatus 100 may identify a stereographic projection point Ps. The electronic apparatus 100 may identify a mixed projection point Pm.

The mixed projection point Pm may be described as the perspective-stereographic projection position.

The distortion point Pd may be an actual input of the camera, and may be a point related to the input without any processing (or correction). The distortion point Pd may generally reflect the distortion related to a radial direction of the lens.

The undistortion point Pu may be an image point acquired by applying camera calibration. For example, the camera calibration may include Brown-Conrady distortion model. The electronic apparatus 100 may acquire the undistortion point Pu by removing the radial distortion included in the distorted image.

The mixed projection point Pm may be closer to the image center point Po than the undistortion point Pu, and further from the image center point Po than the stereographic projection point Ps.

The distortion point Pd may be further away from the image center point Po than the stereographic projection point Ps.

Embodiment 810 of FIG. 8 shows an embodiment where the mixed projection point Pm is corrected to be farther away from the reference point Po than the distortion point Pd. Depending on a distortion type, there may also be an embodiment where the mixed projection point Pm is corrected to be closer to the reference point Po than the distortion point Pd.

"f" may indicate a focal distance of an optical system.

Embodiment 820 of FIG. 8 shows a mathematical equations used to calculate the point shown in Embodiment 810.

The electronic apparatus 100 may calculate the distance ru on the image plane from the image center point Po to the undistortion point Pu.

The electronic apparatus 100 may calculate the distance ru by using Equation 1.

The distance rd may be the distance from the image center point Po to the distortion point Pd.

(xu, yu) may be coordinates of the undistortion point Pu.

(xu, yu) may be coordinates used in a pinhole camera. The pinhole camera may be described as a first-type camera. The first-type camera may be the camera that includes no lens. (xu, yu) may be described as first-type coordinates.

(xu, yu) may be estimation of ideal projection (xp,yp) in a pinhole camera.

(xs, ys) may be coordinates of the stereographic projection point Ps.

(xs, ys) may be coordinates used in a fisheye camera. The fisheye camera may be described as a second-type camera. The second-type camera may include a fisheye lens. (xs, ys) may be described as second-type coordinates.

There can be various types of fisheye lenses. Equation 3 is applicable only for stereographic projection. Other types requires additional transform as for face correction the stereographic one may be needed. A fisheye camera may require undistortion step.

The electronic apparatus 100 may acquire the first-type coordinates of (xu, yu) based on (xs, ys) corresponding to the second-type coordinates by using Equation 2.

The electronic apparatus 100 may acquire the second-type coordinates of (xs, ys) based on (xu, yu) corresponding to the first-type coordinates by using Equation 3.

The electronic apparatus 100 may need one of Equation 2 or Equation 3 depending whi ch type of lens is used in a camera. Both type of lens may be used in hardware design with dir ect mixing without any calculation.

The electronic apparatus 100 may mutually calculate the distortion coordinates and the undistortion coordinates by using Equations 2 and 3.

The electronic apparatus 100 may calculate the distance rm on the image plane from the image center point Po to the mixed projection point Pm by using Equation 4 based on the distance rs and lens correction coefficients ks1, ks2, and ks3.

The electronic apparatus 100 may generate a regular grid of texture coordinates in the distorted image. The electronic apparatus 100 may identify the mixed projection point Pm corresponding to a grid node. The electronic apparatus 100 may identify a distorted and regular grid and a corrected mesh node. The electronic apparatus 100 may render a corrected mesh and use an original image as a texture target image.

The mixed projection point Pm may exist between the undistortion point Pu and the stereographic projection point Ps. In the region where lines are not identified (for example, a region where the face is identified), the mixed projection point Pm may be closer to the image center point Po than the distortion point Pd.

The electronic apparatus 100 may use various models to acquire the mixed projection point Pm.

According to an embodiment, the electronic apparatus 100 may acquire the mixed projection point Pm by using a polynomial model. A mathematical approach related thereto may be Equation 4 in Embodiment 820. The electronic apparatus 100 may apply the polynomial model to the stereographic projection. The electronic apparatus 100 may perform the calculations in the order of rd, ru, rs, and rm.

According to an implementation example, the electronic apparatus 100 may perform the calculations in the order of rd, rs, and rm, while omitting an operation of calculating ru.

"k" may be a stereo projection correction coefficient. "k" may be a vector of polynomial coefficients. If no correction is required, a value of k may be zero. The electronic apparatus 100 may use a larger value of k as the distortion is increased. For example, k1 may be a predetermined constant (for example, -1/4). "k" (stereo projection correction coefficient) may be described as the lens correction coefficient or a visual appearance correction coefficient.

According to the various embodiments, k may be a spatial function k(x, y). In case of acquiring values of k(x, y) on the image, the electronic apparatus 100 may calculate a corrected shift for a ray passing through P(x, y). The electronic apparatus 100 may use k(x, y) together with a distortion map. The distortion map may have a lower resolution than the original image.

The electronic apparatus 100 may acquire the mixed projection point Pm based on the perspective projection in the region near the line. The electronic apparatus 100 may acquire the mixed projection point Pm based on stereoscopic capturing in a region other than the region near the line.

The electronic apparatus 100 may divide the input image into the regular grids. The electronic apparatus 100 may calculate k based on all cells. If the line intersects a specific cell, the electronic apparatus 100 may correct the specific cell. If the plurality of lines intersect the specific cell, the electronic apparatus 100 may correct the specific cell based on the longest and most curved line.

The electronic apparatus 100 may detect the line in the image by using a line detection model (for example, a line segment detector (LSD)). The line (or candidate line) detected by the line detection model may include the radial distortion. The electronic apparatus 100 may identify a loss function that depends on k related to the distortion map for the distorted line (or candidate line). The electronic apparatus 100 may identify the coefficient k by minimizing the loss function.

Assume that the distorted line pixel has coordinates of (xi, yi). The electronic apparatus 100 may identify the distortion correction model by using Equation 4 in Embodiment 820. The electronic apparatus 100 may acquire coefficient values a, b, and c by using linear equation of ax+by+c=0. The electronic apparatus 100 may perform linear regression analysis by substituting ax+by+c=0 into Equation 4 of Embodiment 820. The electronic apparatus 100 may minimize the residual sum based on the linear regression analysis. The electronic apparatus 100 may identify the coefficient k for the distortion map by minimizing the residual sum. If divergence is observed, the electronic apparatus 100 may be unable to consider the curved line as the straight line. If the loss is within an acceptable range, the electronic apparatus 100 may completely minimize the residual sum.

The electronic apparatus 100 may perform the correction for the perspective projection by using k. The mixed projection point Pm may be close to the undistortion point Pu only along the line. In the non-linear region, the mixed projection point Pm may be closer to the stereoscopic projection position Ps.

According to an embodiment, the electronic apparatus 100 may acquire the mixed projection point Pm by using an additive model. A mathematical approach thereto is described in Embodiment 1330 of FIG. 13. The distortion map may be connected to a coefficient λ.

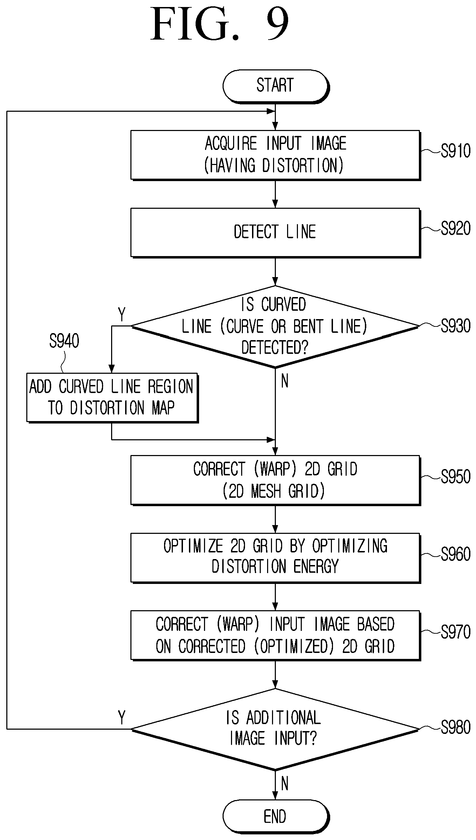

FIG. 9 is a view for explaining an image correction operation according to an embodiment.

Referring to FIG. 9, the electronic apparatus 100 may acquire the input image (S910). The input image may include the distortion. The electronic apparatus 100 may detect the line included in the input image (S920).

The electronic apparatus 100 may determine whether a curved line (curve or a bent line) is detected among the detected lines (S930).

If detecting the curved line (S930-Y), the electronic apparatus 100 may add a curved line region to the distortion map (S940). The curved line region may include information indicating a position at which the curved line is detected. The electronic apparatus 100 may determine the curved line region as a region required to be corrected.

The distortion map may be information indicating a position of the portion where the distortion is detected in all coordinates of the image.

The electronic apparatus 100 may add the curved line region to the distortion map.

For example, the map before reflecting the curved line region may be described as "the distortion map", and the map after reflecting the curved line region may be described as "the updated distortion map".

For example, the map before reflecting the curved line region may be described as "a first distortion map", and the map after reflecting the curved line region may be described as "a second distortion map".

In case of acquiring the distortion map reflecting the curved line region, the electronic apparatus 100 may correct the 2D grid (S950). The electronic apparatus 100 may generate the 2D grid based on the input image. The electronic apparatus 100 may correct the 2D grid for performing mesh-based transformation. The electronic apparatus 100 may perform a warping function on the 2D grid. Warping may include an operation of transforming a specific portion (specific region) included in the input image. Warping may be an operation of transforming the 2D grid corresponding to the specific region in the input image for correcting the image. The 2D grid may be described as a 2D mesh grid.

If detecting no curved line (S930-N), the electronic apparatus 100 may correct the 2D grid (S950). The electronic apparatus 100 may remove the grid in the region where the line is not detected. If the curved line is not detected, the distortion map may not include information on the region where the distortion exists.

The electronic apparatus 100 may divide the original image into regular rectangular grids including nodes (Pd(i, j)). "i" and "j" may be grid node indices in x and y directions. "i" may be greater than zero and less than N. "j" may be greater than zero and less than M. N and M may be the same or different constants. Each node may indicate a point in the distorted space. The grid may be expressed as a matrix of 2D points. The electronic apparatus 100 may acquire the corrected mesh including the mixed projection point Pm by using Equations 3 and 4 in Embodiment 820 of FIG. 8. In performing step S950, the electronic apparatus 100 may use the distortion map as the input data. The electronic apparatus 100 may acquire matrix data including the corrected 2D grid as the output data by performing step S950.

According to the various embodiments, the electronic apparatus 100 may use a triangular grid.

The electronic apparatus 100 may optimize the 2D grid by optimizing distortion energy (S960). The electronic apparatus 100 may acquire the optimized 2D grid. Step S960 may be omitted according to an implementation example.

The electronic apparatus 100 may further change (or adjust) the corrected mesh in step S960. For example, the electronic apparatus 100 may adjust a node position in a video sequence. Mesh jitter may occur in case of individually analyzing a plurality of frames. The corrected node position may include a small error. The error may occur due to quantization, an algorithm fixation critical value, or the like. The electronic apparatus 100 may perform step S960 to reduce the error.

The electronic apparatus 100 may correct the input image based on the corrected 2D grid or the optimized 2D grid (S970). The electronic apparatus 100 may perform the distortion correction on the input image by using the corrected (or optimized) 2D grid. The distortion correction may include performing the warping function. The electronic apparatus 100 may acquire the corrected image.

The electronic apparatus 100 may perform step S970 based on a texture warping technique.

In case of acquiring the corrected image, the electronic apparatus 100 may determine whether an additional image is input (S980). In case of identifying that the additional image is input (S980-Y), the electronic apparatus 100 may repeat steps S910 to S980. For example, the video may include the plurality of images. The electronic apparatus 100 may perform steps S910 to S980 on a video that includes consecutive image frames.

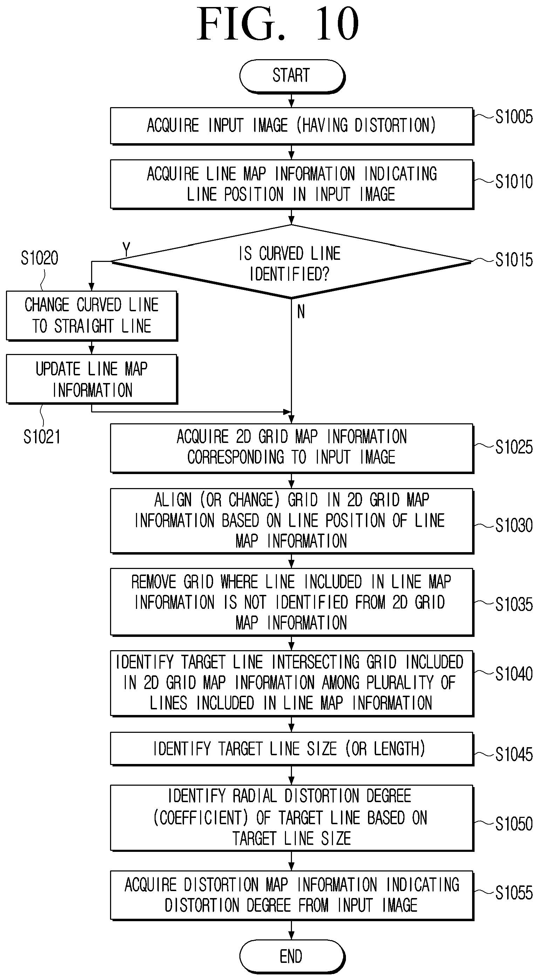

FIG. 10 is a view for explaining an image correction operation according to an embodiment.

Referring to FIG. 10, the electronic apparatus 100 may acquire the input image (S1005). The electronic apparatus 100 may acquire the line map information indicating the line position in the input image (S 1010). The electronic apparatus 100 may determine whether the curved line is identified in the line map information (S1015).

If the curved line is identified (S1015-Y), the electronic apparatus 100 may change the curved line to the straight line (S1020). The electronic apparatus 100 may update the line map information (S1021).

If the curved line is not identified (S1015-N), the electronic apparatus 100 may acquire the 2D grid map information corresponding to the input image (S1025).

The electronic apparatus 100 may align (or change) the grid (or grid line) in the 2D grid map information based on the line position of the line map information (S1030).

The electronic apparatus 100 may remove the grid where the line included in the line map information is not identified from the 2D grid map information (S1035). An operation thereof is described with reference to FIG. 12.

The electronic apparatus 100 may identify the target line intersecting the grid (or grid line) included in the 2D grid map information among the plurality of lines included in the line map information (S1040).

The electronic apparatus 100 may identify the target line size (or length) (S1045). The electronic apparatus 100 may identify the radial distortion degree (or coefficient) of the target line based on the target line size (S1050).

The electronic apparatus 100 may acquire the distortion map information indicating the distortion degree from the input image (S1055).

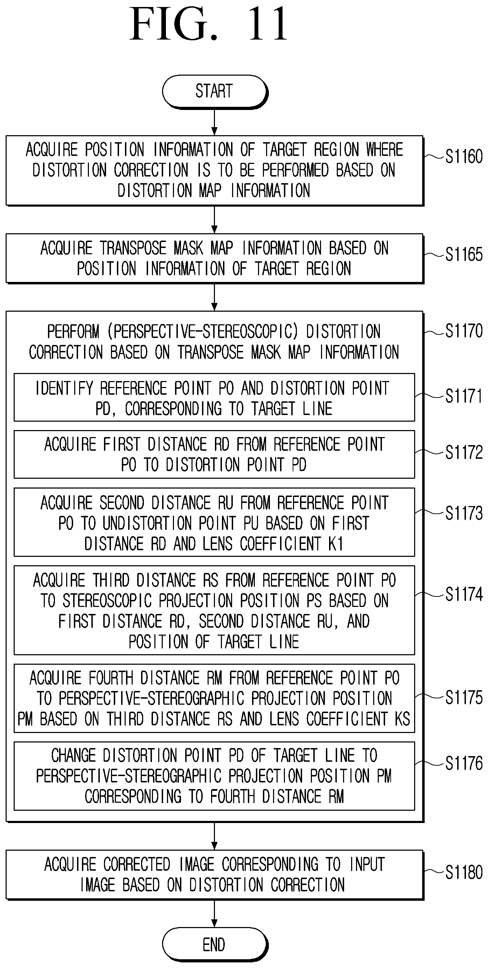

FIG. 11 is a view for explaining an image correction operation according to an embodiment.

Referring to FIG. 11, the electronic apparatus 100 may acquire the position information of the target region where the distortion correction is to be performed based on the distortion map information after performing step S1055 of FIG. 10 (S1160).

The electronic apparatus 100 may acquire the transpose mask map information based on the position information of the target region (S1165).

The electronic apparatus 100 may correct the distortion based on the transpose mask map information (S1170). The distortion correction may be the perspective-stereoscopic distortion correction.

The electronic apparatus 100 may identify the reference point Po corresponding to the target line and the distortion point Pd corresponding to the target line (S1171).

The electronic apparatus 100 may acquire the first distance rd from the reference point Po to the distortion point Pd (S1172).

The electronic apparatus 100 may acquire the second distance ru from the reference point Po to the undistortion point Pu based on the first distance rd and the lens coefficient k1 (S1173).

The electronic apparatus 100 may acquire the third distance rs from the reference point Po to the stereoscopic projection position Ps based on the first distance rd, the second distance ru, and the position of the target line (S1174).

The electronic apparatus 100 may acquire the fourth distance rm from the reference point Po to the perspective-stereographic projection position Pm based on the third distance rs and the lens coefficient Ks (S1175).

The electronic apparatus 100 may change the distortion point Pd of the target line to the perspective-stereographic projection position Pm corresponding to the fourth distance rm (S1176).

The electronic apparatus 100 may acquire the corrected image corresponding to the input image based on the distortion correction (S1180).

FIG. 12 is a view for explaining the 2D grid for the input image according to an embodiment.

Embodiment 1211 of FIG. 12 shows the 2D grid corresponding to the input image. The electronic apparatus 100 may generate the 2D grid based on the input image. The electronic apparatus 100 may generate the 2D grid having the predetermined size (or unit) based on each pixel included in the input image. The electronic apparatus 100 may acquire a first intermediate image including the 2D grid.

Embodiment 1212 of FIG. 12 shows a transformed 2D grid. The electronic apparatus 100 may transform the 2D grid based on the detected line. The electronic apparatus 100 may remove the grid in the region where the line is not detected. The electronic apparatus 100 may acquire a second intermediate image from which the grid in the region where the line is not detected is removed. The operation of transforming the 2D grid may be described as an operation of warping the 2D grid. A calculation method related thereto may use Equations 3 and 4 of Embodiment 820 in FIG. 8.

The electronic apparatus 100 may perform the distortion correction based on the second intermediate image.

FIG. 13 is a view for explaining the image correction operation using the mask according to an embodiment.

Referring to FIG. 13, the electronic apparatus 100 may warp the 2D grid by using the stereographic projection in performing the distortion correction.

The electronic apparatus 100 may correct the curved line by using Equation 1300 of FIG. 13. The electronic apparatus 100 may correct the curved line to the line (i.e., straight line). The electronic apparatus 100 may apply the curved line to the line model by using Equation 1300 of FIG. 13.

Equation 1300 of FIG. 13 shows an embodiment where the correction is performed using the polynomial model. According to an embodiment, the electronic apparatus 100 may acquire the mixed projection point Pm by using the polynomial model.

"n" may indicate an index of the detected line.

"u" may indicate pixel coordinates of the non-distorted line.

"d" may indicate pixel coordinates of the distorted line.

k3 or k5 may be a predetermined coefficient. k3 or k5 may be changed based on the user setting. k3 or k5 may reflect a weight to maintain a balance between the stereographic projection and the perspective projection, and indicate a degree to which the curved line is changed to the straight line. In case of adjusting k3 or k5, a specific curved line may be changed and another region may not be changed.

The electronic apparatus 100 may detect the line and calculate coefficients of the line model. The electronic apparatus 100 may match the line (line itself indicating the grid, which is different from the image line) of each 2D grid in the input image to the line model. For example, the electronic apparatus 100 may change the 2D grid position to match the line detected in the input image to the grid line in the 2D grid map information.

The electronic apparatus 100 may identify the line model by using the coefficients a, b, and c of the line equation and the coefficients k3 and k5 of the distortion model. Applying the curved line to the line model may include an operation of transforming the curved line into the straight line. The operation of transforming the curved line into the straight line may include an operation of calculating Equations 3 and 4 of Embodiment 820 in FIG. 8.

Equation 1300 of FIG. 13 may correspond to Equation 4 of Embodiment 820 in FIG. 8.

According to the various embodiments, the electronic apparatus 100 may perform the correction by using the additive model. The electronic apparatus 100 may acquire the mixed projection point Pm by using the additive model.

The electronic apparatus 100 may acquire the transpose mask. The transpose mask may indicate the grid or pattern (or region) for transforming the image. The transpose mask may be information for specifying a region for transforming the specific region (or portion) in the image. The transpose mask may be a tool for the user to identify the specific region for correcting the distortion. The transpose mask may include a filtering function for indicating the specific region.

The electronic apparatus 100 may acquire an input image 1310. The electronic apparatus 100 may acquire a transpose mask 1315 for the input image 1310. The electronic apparatus 100 may specify the region where the distortion is to be corrected by using the transpose mask 1315. The electronic apparatus 100 may acquire a corrected image 1320 by using the transpose mask 1315.

The electronic apparatus 100 may further use Equation 1330 to acquire the corrected image 1320. Equation 1330 may indicate a projection mixture model.

"ρ" may indicate a radius of polar coordinates.

"λ" may indicate a constant (or weight) related to a distortion angle.

"r" may indicate a distance from the center point to a specific position of the image pixel.

"R" may indicate the distortion size (or distance).

rm, ru, rs, and f may correspond to the embodiment in FIG. 8. fs may be the effective stereo focal length. λ may be a linear mixing coefficient in the range of [0, 1]. The linear mixing coefficient can be used to determine a model appropriate for an image region.

The additive model may be a more theoretically proven equation than the polynomial model. The additive model may be more intuitive because the additive model is linear rather than the polynomial model. The additive model may depend only on the parameter λ.

λ may be 1 if the straight line and the cell intersect each other. λ may be zero if the straight line and the cell do not intersect each other.

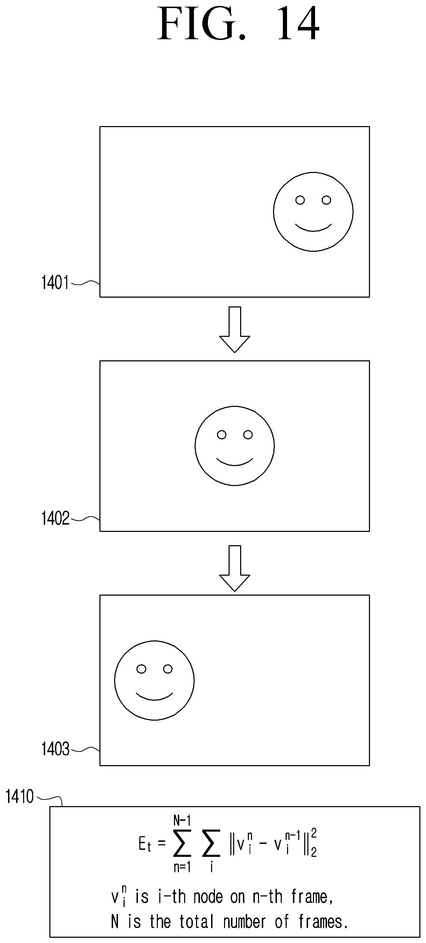

FIG. 14 is a view for explaining the correction operation on a video where an object is moved according to an embodiment.

Referring to FIG. 14, assume that the video includes a plurality of consecutive images 1401, 1402, and 1403. The electronic apparatus 100 may perform the distortion correction on each of the plurality of consecutive images. The video may show that the human face moves from a right region to a left region.

The electronic apparatus 100 may perform the distortion correction on the video by using Equation 1410.

Equation Et may indicate node smoothing energy. Equation Et may be used to prevent node jitter. Equation Et may be a calculation equation used in step S960 of FIG. 9. One image frame may not require a smoothing operation. An image content including the plurality of image frames may require the smoothing operation. The electronic apparatus 100 may optimize the 2D grid by minimizing Equation Et. Equation Et may indicate a distortion energy function.

Vi^n may indicate an ith node of an nth frame. The plurality of frames may be divided into the grids for further warping.

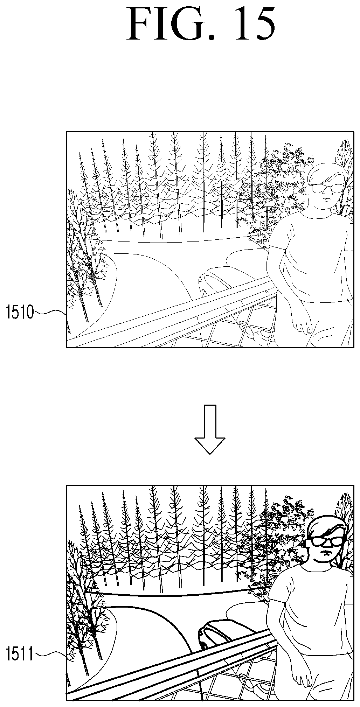

FIG. 15 is a view for explaining a line detection operation according to an embodiment.

The electronic apparatus 100 may detect the line by using an input image 1510. The electronic apparatus 100 may detect the line included in the input image 1510. The electronic apparatus 100 may distinguish the line type. The line type may include the straight line (the first type) and the curved line (the second type).

The electronic apparatus 100 may determine the straight line and the curved line based on the input image 1510. The electronic apparatus 100 may determine the position of the straight line and the position of the curved line in the input image 1510. The electronic apparatus 100 may acquire line map information 1511 including the position of the straight line and the position of the curved line based on the input image 1510.

The electronic apparatus 100 may display a first UI at the position of the straight line and a second UI at the position of the curved line, in the input image 1510. The first UI and the second UI included in the line map information 1511 may be provided in different colors (or types).

FIG. 16 is a view for explaining an image correction operation according to an embodiment.

Referring to FIG. 16, the electronic apparatus 100 may acquire an input image (S1610). The electronic apparatus 100 may search for the curved line in the input image (S1620). The electronic apparatus 100 may correct the searched curved line to the straight line (S1630). Equation 1 may be used for the correction operation.

The electronic apparatus 100 may divide the input image into the 2D grids (S1640). The electronic apparatus 100 may evaluate the radial distortion by the weighted average k3 or k5 based on a length of the line intersecting the grid. k3 or k5 may indicate the coefficient indicating the distortion.

The electronic apparatus 100 may acquire the first type of 2D grid information for warping the image.

The electronic apparatus 100 may acquire the second type of 2D grid information for evaluating the distortion. The 2D grid used in step S1640 may be the second type of grid for evaluating the distortion. The second type of 2D grid may include a grid of cells related to the distortion correction coefficients. The second type of 2D grid may be used to prevent a distortion change that is changed suddenly based on the image.

The electronic apparatus 100 may perform an operation of interpolation k3 or k5 on the input image (S1650).

The electronic apparatus 100 may acquire a distortion coefficient from a low-resolution distortion map to calculate corrected positions of all mesh nodes by using bilinear interpolation. A resolution of the distortion map and that of the 2D mesh may be different from each other, thus requiring the distortion coefficient.

The electronic apparatus 100 may apply the stereoscopic correction to node coordinates by evaluating the distorted grid, and correct line distortion based on the distortion coefficient k3 or k5 (S1660).

The electronic apparatus 100 may perform the distortion correction on the entire image (S1670). The electronic apparatus 100 may acquire a final corrected image by using an unwarping operation (S1670). The unwarping operation may be described as an image distortion removal operation. The electronic apparatus 100 may acquire an image without the distortion in step S1670.

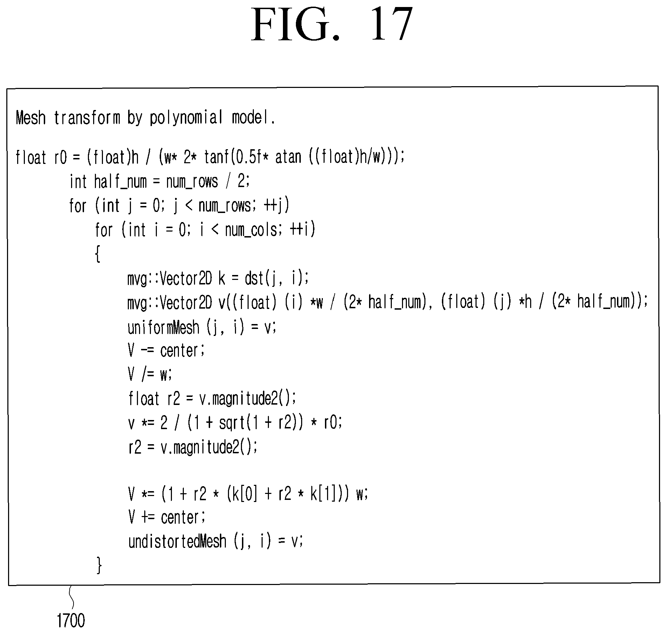

FIG. 17 is a view for explaining a mesh transformation process according to an embodiment.

A code 1700 of FIG. 17 may be used for the mesh transformation. The electronic apparatus 100 may perform the mesh transformation by the polynomial distortion model using the code 1700.

The electronic apparatus 100 may acquire the distortion map including the polynomial coefficient vector k3 or k5. The electronic apparatus 100 may input the distortion map as the input data to a first model including the code 1700. The electronic apparatus 100 may acquire the matrix data (uniformMesh) indicating a regular grid point and the matrix data (undistortedMesh) indicating an undistorted grid point as the output data through the first model.

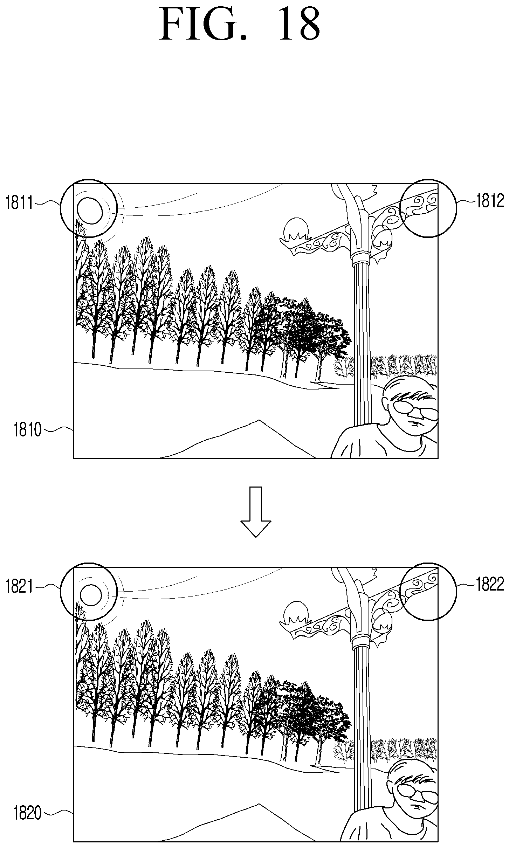

FIG. 18 is a view for explaining an image correction result according to an embodiment.

An image 1810 of FIG. 18 shows the input image where the distortion exists. For example, the distortion may exist in regions 1811 and 1812. The electronic apparatus 100 may perform the distortion correction on the entire image 1810.

An image 1820 of FIG. 18 shows the corrected image where the distortion correction is performed. The distortion may be removed (or corrected) from the regions 1821 and 1822.

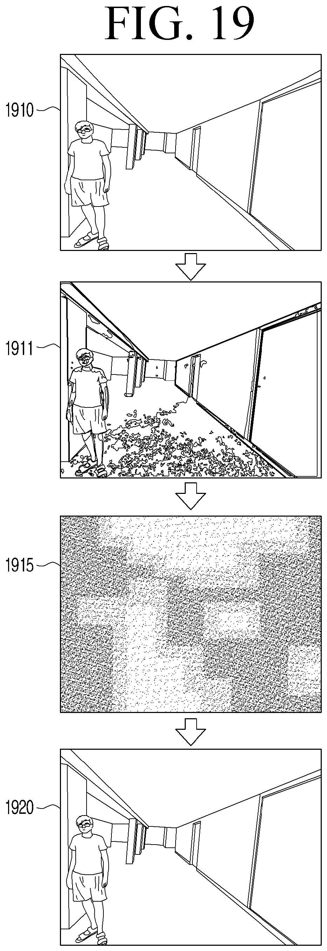

FIG. 19 is a view for explaining the image correction operation performed based on the line detection and the mask according to an embodiment.

Referring to FIG. 19, the electronic apparatus 100 may acquire an input image 1910. The electronic apparatus 100 may detect the line based on the input image 1910. The electronic apparatus 100 may acquire line map information 1911 of the input image 1910.

The electronic apparatus 100 may acquire a transpose mask 1915 based on the input image 1910 and the line map information 1911. The electronic apparatus 100 may specify (or filter) a region where the distortion is to be corrected based on the transpose mask 1915.

The electronic apparatus 100 may perform the distortion correction based on the input image 1910, the line map information 1911, and the transpose mask 1915. The electronic apparatus 100 may acquire a corrected image 1920 by performing the distortion correction.

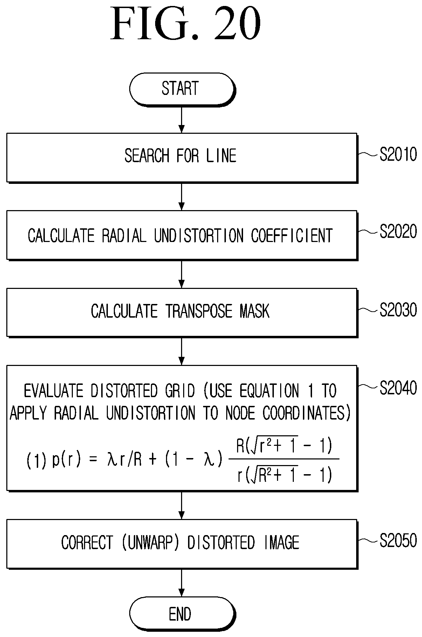

FIG. 20 is a view for explaining an image correction operation according to an embodiment.

Referring to FIG. 20, the electronic apparatus 100 may search for the line in the input image (S2010). The electronic apparatus 100 may calculate a radial undistortion coefficient (S2020).

The electronic apparatus 100 may calculate the transpose mask (or a mixture mask) (S2030).

The electronic apparatus 100 may evaluate the distorted grid (S2040). The electronic apparatus 100 may use Equation 1 to apply radial undistortion to the node coordinates. Equation 1 may correspond to Equation 1330 of FIG. 13.

The electronic apparatus 100 may perform the distortion correction (S2050). The electronic apparatus 100 may perform a restoration operation of correcting the distorted image. The electronic apparatus 100 may perform the unwarping operation of correcting the distortion.

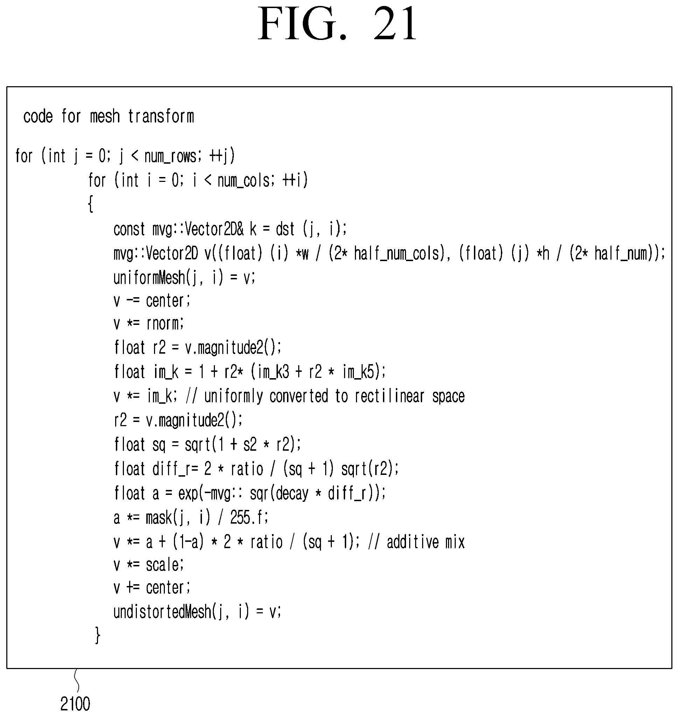

FIG. 21 is a view for explaining a mesh transformation process according to an embodiment.

A code 2100 of FIG. 21 may be used for the mesh transformation. The electronic apparatus 100 may perform the mesh transformation by the additive model using the code 2100.

The electronic apparatus 100 may acquire the distortion map including the polynomial coefficient vector k3 or k5. The electronic apparatus 100 may input the distortion map as the input data to a second model including the code 2100. The electronic apparatus 100 may acquire the matrix data (uniformMesh) indicating the regular grid point and the matrix data (undistortedMesh) indicating the undistorted grid point as the output data by using the second model.

λ used in the additive model may indicate information on the line forming the mask. The code 2100 may use exponential weighting.

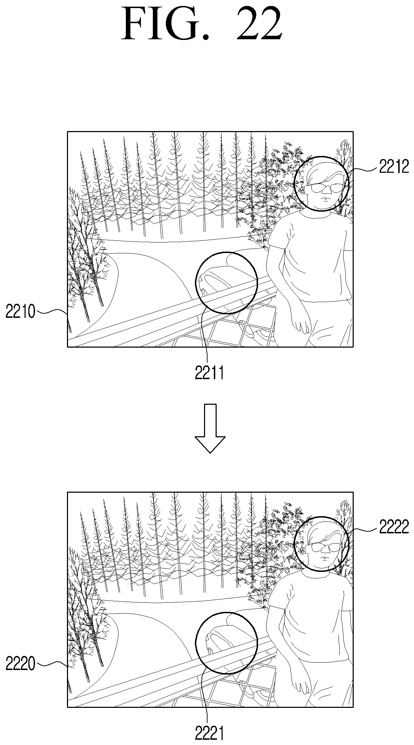

FIG. 22 is a view for explaining an image correction result according to an embodiment.

An image 2210 of FIG. 22 may indicate the input image where the distortion exists. For example, the distortion may exist in regions 2211 and 2212. The electronic apparatus 100 may perform the distortion correction on the entire image 2210.

An image 2220 of FIG. 22 may indicate the corrected image where the distortion correction is performed. The distortion may be removed (or corrected) from the regions 2221 and 2222.

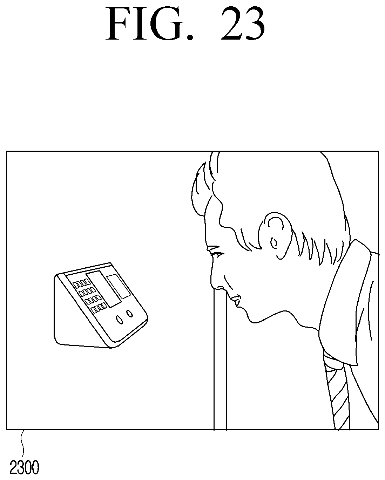

FIG. 23 is a view for explaining a device that may apply the image correction according to an embodiment.

Referring to Embodiment 2300 of FIG. 23, the electronic apparatus 100 may perform the distortion correction in performing a face recognition function.

The electronic apparatus 100 may be a device that performs the face recognition function. The electronic apparatus 100 may acquire the input image including a face object to perform the face recognition function. The input image acquired by the electronic apparatus 100 may include a distorted face object. If the face object is distorted, the face recognition function may have lower performance.

The electronic apparatus 100 may perform the distortion correction on the input image to acquire the corrected image having the reduced (or removed) distortion. The electronic apparatus 100 may correct the distortion in the face region by performing the correction on the entire image without separately identifying the face region.

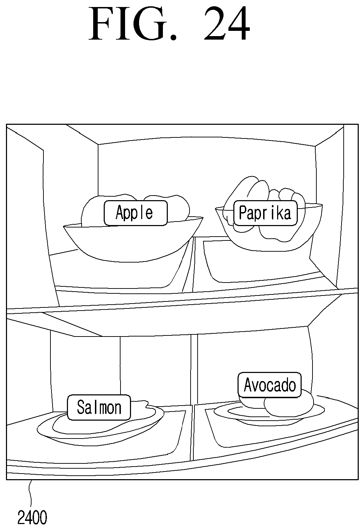

FIG. 24 is a view for explaining a device that may apply the image correction according to an embodiment.

Referring to Embodiment 2400 in FIG. 24, the electronic apparatus 100 may perform the distortion correction in providing an augmented reality (AR) service.

The electronic apparatus 100 may be a device that performs an AR function. The electronic apparatus 100 may acquire the input image including various objects to provide the AR function. The electronic apparatus 100 may perform the distortion correction on the acquired input image, and acquire the corrected image as the correction result.

The electronic apparatus 100 may identify the plurality of objects based on the corrected image. The electronic apparatus 100 may search for (or acquire) information corresponding to the plurality of objects. The electronic apparatus 100 may have improved performance in acquiring AR information because the distortion is removed from the corrected image.

For example, the electronic apparatus 100 may identify a first object as an apple object. The electronic apparatus 100 may acquire information (text: apple) on the apple object. The electronic apparatus 100 may provide an AR image where the information (text: apple) on the apple object is displayed at a position corresponding to the first object.

For example, the electronic apparatus 100 may be a refrigerator. The electronic apparatus 100 may acquire the input image including various objects existing inside the refrigerator. Some of the objects included in the input image may be distorted because the camera lens capturing the inside of the refrigerator is fixed. The electronic apparatus 100 may acquire the corrected image by correcting the distortion occurring in the input image. The electronic apparatus 100 may acquire information on each object based on the corrected image, and the electronic apparatus 100 may provide, in the input image, the AR image that further includes the information on each object.

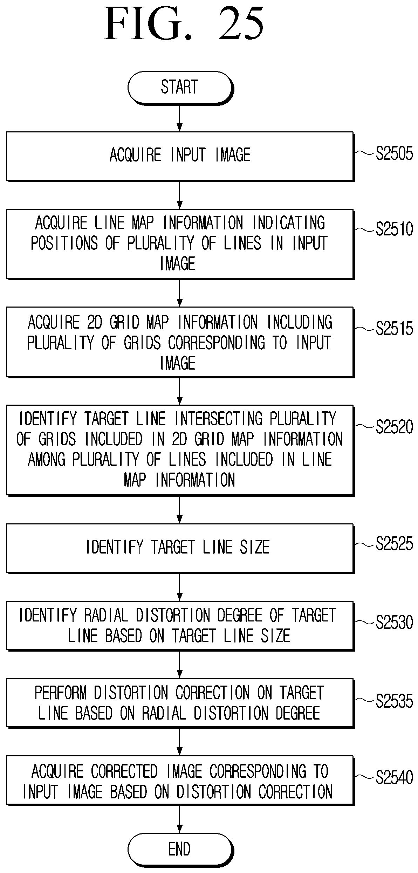

FIG. 25 is a view for explaining a controlling method of an electronic apparatus according to an embodiment.

Referring to FIG. 25, provided is the controlling method of an electronic apparatus, the method including: acquiring an input image (S2505); acquiring line map information indicating positions of plurality of lines in the input image (S2510); acquiring two-dimensional (2D) grid map information including a plurality of grids corresponding to the input image (S2515); identifying a target line intersecting the plurality of grids included in the 2D grid map information among the plurality of lines included in the line map information (S2520); identifying a target line size (S2525); identifying a radial distortion degree of the target line based on the target line size (S2530); performing distortion correction on the target line based on the radial distortion degree (S2535); and acquiring a corrected image corresponding to the input image based on the distortion correction (S2540).

The method may further include: changing a curved line to a straight line if the curved line is identified in the line map information; and updating the line map information based on the changed straight line.

The method may further include changing a position of the grid included in the 2D grid map information based on the line position included in the line map information.

The method may further include: identifying a region where the line is not identified in the line map information; and removing the grid corresponding to the region where the line is not identified from the 2D grid map information.

The method may further include acquiring distortion map information indicating the radial distortion degree of the plurality of target lines included in the input image, wherein in the performing of the distortion correction, the distortion correction is performed based on the distortion map information.

The method may further include identifying position information of a target region where the distortion correction is to be performed based on the distortion map information, and acquiring transpose mask map information based on the position information of the target region, wherein in the performing of the distortion correction, the distortion correction is performed based on the transpose mask map information.

In the performing of the distortion correction, a reference point corresponding to the target line and a distortion point corresponding to the target line may be identified, a first distance from the reference point to the distortion point may be acquired, a second distance from the reference point to an undistortion point corresponding to the target line may be acquired based on the first distance and a lens coefficient corresponding to the input image, and the distortion correction may be performed based on the first distance and the second distance.

In the performing of the distortion correction, a third distance from the reference point to a stereoscopic projection position may be acquired based on the first distance, the second distance, and a position of the target line, a fourth distance from the reference point to a perspective-stereographic projection position may be acquired based on the third distance and the lens coefficient, and the distortion correction may be performed based on the third distance and the fourth distance.

In the performing of the distortion correction, the distortion correction may be performed by changing the distortion point corresponding to the target line to the perspective-stereographic projection position corresponding to the fourth distance.

The electronic apparatus may further include a camera including a wide-angle lens, and in the acquiring of the input image, the input image may be acquired using the camera including the wide-angle lens.

The methods according to the various embodiments of the disclosure described above may be implemented in the form of an application which may be installed in a conventional electronic apparatus.

The methods according to the various embodiments of the present disclosure described above may be implemented only by software upgrade or hardware upgrade of the conventional electronic apparatus.

The various embodiments of the disclosure described above may be performed through an embedded server included in the electronic apparatus, or an external server of at least one of the electronic apparatus and the display device.

According to an embodiment of the disclosure, the various embodiments described above may be implemented by software including an instruction stored in a machine-readable storage medium (for example, a computer-readable storage medium). A machine may be a device that invokes the stored instruction from the storage medium, may be operated based on the invoked instruction, and may include the electronic apparatus in the disclosed embodiments. In case that the instruction is executed by the processor, the processor may perform a function corresponding to the instruction directly or by using another component under control of the processor. The instruction may include a code provided or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

According to an embodiment of the disclosure, the methods according to the various embodiments described above may be provided by being included in a computer program product. The computer program product may be traded as a product between a seller and a purchaser. The computer program product may be distributed in a form of the machine-readable storage medium (for example, a compact disc read only memory (CD-ROM)) or online through an application store (for example, PlayStore^{™}). In case of the online distribution, at least some of the computer program products may be at least temporarily stored in a storage medium such as a memory of a server of a manufacturer, a server of an application store, or a relay server, or be temporarily generated.

Each of the components (for example, modules or programs) according to the various embodiments described above may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

Although the embodiments are shown and described in the present disclosure as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:
a memory storing instructions; and
at least one processor configured to execute the instructions,
wherein, by executing the instructions, the at least one processor is configured to:
acquire an input image,
acquire line map information indicating positions of a plurality of lines in the input image,
acquire two-dimensional (2D) grid map information including a plurality of grids corresponding to the input image,
identify a target line intersecting the plurality of grids included in the 2D grid map information among the plurality of lines included in the line map information,
identify a size of the target line,
identify a degree of radial distortion of the target line based on the size of the target line,
perform distortion correction on the target line based on the degree of radial distortion, and
acquire a corrected image corresponding to the input image based on the distortion correction.

2. The apparatus as claimed in claim 1, wherein the at least one processor is further configured to:
change a curved line to a straight line based on the curved line being identified in the line map information, and
update the line map information based on the changed straight line.

3. The apparatus as claimed in claim 1, wherein the at least one processor is further configured to change a position of a grid among the plurality of grids based on a position of a line among the plurality of lines.

4. The apparatus as claimed in claim 1, wherein the at least one processor is further configured to:
identify a region in the input image at which a line is not identified among the plurality of lines, and
remove a grid corresponding to the region at which a line is not identified from the 2D grid map information.

5. The apparatus as claimed in claim 1, wherein the at least one processor is further configured to:
acquire distortion map information about a degree of radial distortion of a plurality of target lines identified in the input image, and
perform distortion correction on the plurality of target lines based on the distortion map information.

6. The apparatus as claimed in claim 5, wherein the at least one processor is further configured to:
identify position information about a target region at which the distortion correction is to be performed based on the distortion map information,
acquire transpose mask map information based on the position information about the target region, and
perform the distortion correction based on the transpose mask map information.

7. The apparatus as claimed in claim 1, wherein the at least one processor is further configured to:
identify a reference point corresponding to the target line and a distortion point corresponding to the target line,
acquire a first distance from the reference point to the distortion point,
acquire a second distance from the reference point to an undistortion point corresponding to the target line, based on the first distance and a lens coefficient corresponding to the input image, and
perform the distortion correction based on the first distance and the second distance.

8. The apparatus as claimed in claim 7, wherein the at least one processor is further configured to:
acquire a third distance from the reference point to a stereoscopic projection position based on the first distance, the second distance, and a position of the target line,
acquire a fourth distance from the reference point to a perspective-stereographic projection position based on the third distance and the lens coefficient, and
perform the distortion correction based on the third distance and the fourth distance.

9. The apparatus as claimed in claim 8, wherein the at least one processor is further configured to perform the distortion correction by changing the distortion point corresponding to the target line to the perspective-stereographic projection position corresponding to the fourth distance.

10. The apparatus as claimed in claim 1, further comprising a camera comprising a wide-angle lens,
wherein the at least one processor is further configured to acquire the input image by using the camera comprising the wide-angle lens.

11. A controlling method of an electronic apparatus, the method comprising:
acquiring an input image;
acquiring line map information indicating positions of a plurality of lines in the input image;
acquiring two-dimensional (2D) grid map information including a plurality of grids corresponding to the input image;
identifying a target line intersecting the plurality of grids included in the 2D grid map information among the plurality of lines included in the line map information;
identifying a size of the target line;
identifying a degree of radial distortion of the target line based on the size of the target line;
performing distortion correction on the target line based on the degree of radial distortion; and
acquiring a corrected image corresponding to the input image based on the distortion correction.

12. The method as claimed in claim 11, further comprising:
changing a curved line to a straight line based on the curved line being identified in the line map information; and
updating the line map information based on the changed straight line.

13. The method as claimed in claim 11, further comprising changing a position of a grid among the plurality of grids based on a position of a line among the plurality of lines.

14. The method as claimed in claim 11, further comprising:
identifying a region in the input image at which a line is not identified among the plurality of lines; and
removing a grid corresponding to the region at which a line is not identified from the 2D grid map information.

15. The method as claimed in claim 11, further comprising acquiring distortion map information about a degree of radial distortion of a plurality of target lines identified in the input image,
wherein in the performing of the distortion correction, the distortion correction is performed on the plurality of target lines based on the distortion map information.
